# EUROPÄISCHE PATENTSCHRIFT

(11) **EP 3 356 111 B1**
(45) Veröffentlichungstag und Bekanntmachung des Hinweises auf die Patenterteilung: **21.10.2020**
(21) Anmeldenummer: 16782016.6
(22) Anmeldetag: 30.09.2016
(51) Int. Cl.: B29C 45/14

(54) **VORRICHTUNG ZUM AUSBILDEN VON ANBAUTEILEN**
DEVICE FOR FORMING ADD-ON PARTS
DISPOSITIF DE FORMATION DE PIÈCES ADDITIONNELLES

(30) Priorität: 02.10.2015 DE 102015219103
(43) Veröffentlichungstag der Anmeldung: 08.08.2018
(73) Patentinhaber: Homag Bohrsysteme GmbH, 33442 Herzebrock-Clarholz (DE)
(72) Erfinder: BETTERMANN, Thomas, 33699 Bielefeld (DE)
(74) Vertreter: Hoffmann Eitle
(86) Internationale Anmeldenummer: PCT/EP2016/073440
(87) Internationale Veröffentlichungsnummer: WO 2017/055562

(56) Entgegenhaltungen:
- EP-A1- 1 325 799
- EP-A1- 2 383 196
- EP-A1- 2 589 478
- EP-A1- 2 889 115
- EP-A2- 1 335 137
- WO-A1-2009/102219
- WO-A1-2011/103625
- DE-A1- 19 930 826
- US-A- 3 309 123
- US-A- 3 492 381
- US-A1- 2005 276 874

## Beschreibung

### Technisches Gebiet

Die vorliegende Erfindung betrifft eine Vorrichtung, die insbesondere zur Be- und/oder Verarbeitung von beispielsweise plattenförmigen Werkstücken aus Holz, Holzwerkstoffen, oder dergleichen, zum Einsatz kommt. Derartige Werkstücke werden bevorzugt im Bereich der Möbel- und Bauelementeindustrie eingesetzt. Rein beispielhaft kann es sich um Möbelfronten, Einlegebretter, Rahmenelemente oder ähnliches, sowie um komplexere Bauteile, handeln.

### Stand der Technik

Bei der Herstellung von Werkstücken im dem Bereich der Möbel- und Bauelementeindustrie ist es üblich, dass Ausgangswerkstücke aus Holz- oder Holzwerkstoffen nachträglich mit Anbauteilen versehen werden. Hierbei handelt es sich bspw. um Standfüße für Schränke, Griffe für Schubladen, Stifte zur Verbindung eines solchen Werkstücks mit einem weiteren Werkstück, usw. Hierzu werden die üblicherweise plattenförmigen Werkstücke mit einer Bohrung versehen, in die nachträglich das entsprechende Bauteil eingedrückt werden soll.

In diesem Zusammenhang ist es bekannt, Anbauteile herstellerseitig bereits mit dem Werkstück zu verbinden. Hierzu wird in einem Speicher eine Vielzahl von solchen Anbauteilen vorgehalten, die entsprechend zu bevorraten sind. Aus diesem Speicher werden die Anbauteile vereinzelt und einer Maschine zugeführt, die diese Anbauteile in bereits vorbereitete Werkstücke einsetzt. Als eine solche Maschine kann bspw. auch eine Holzbearbeitungsmaschine verwendet werden, die auch weitere spanende Bearbeitung an den Werkstücken durchführt, bspw. die zum Einsetzen der Anbauteile verwendeten Bohrungen vorsieht.

Allerdings hat sich gezeigt, dass für die Bevorratung der Anbauteile ein hoher logistischer Aufwand erforderlich ist, und darüber hinaus entsprechende Lagerkapazitäten vorhanden sein müssen.

Die EP 2 383 196 A1 betrifft ein Verfahren sowie eine Vorrichtung zum Herstellen von thermoplastischen Deckeln mit einem festen Kopf.

In der EP 2 889 115 A1 wird eine Vorrichtung zum Ausbilden von Öffnungsvorrichtungen an einem Verpackungsmaterial zum Verpacken von Lebensmitteln gezeigt.

Ferner ist die DE 199 30 826 A1 bekannt, die ein Verfahren zum Einbringen von schlagabsorbierenden Pfropfen in Befestigungsbohrungen von Verkleidungsplatten beschreibt.

### Gegenstand der Erfindung

Ziel der vorliegenden Erfindung ist es, eine Vorrichtung bereitzustellen, mit der bei geringerem logistischem Aufwand insbesondere plattenförmige Werkstücke mit Anbauteilen versehen werden können.

Der Gegenstand des unabhängigen Anspruchs 1 stellt eine entsprechende Vorrichtung bereit. Weitere bevorzugte Ausführungsformen sind in den abhängigen Ansprüchen aufgeführt. Ferner betrifft die vorliegende Erfindung ein Verfahren gemäß Anspruch 12.

Insbesondere wird eine Vorrichtung bereitgestellt, mit der bevorzugt plattenförmige Werkstücke aus Holz, Holzwerkstoffen oder gleichen be- und/oder verarbeitet werden können. Die Vorrichtung weist einen Auflageabschnitt zur Auflage eines insbesondere plattenförmigen Werkstücks sowie einen Trägerabschnitt auf, insbesondere einen Ausleger, ein Portal oder einen Gelenkarmroboter, welcher Trägerabschnitt ein Arbeitsaggregat aufnimmt. Der Trägerabschnitt kann sich dabei gemäß einer bevorzugten Ausführungsform zumindest teilweise über den Auflageabschnitt erstrecken. Das Arbeitsaggregat wiederum umfasst eine Zuführeinheit zum Zuführen eines Ausbildungsmaterials sowie einen Anbringabschnitt für eine Matrize. Die Matrize ist erfindungsgemäß an ein Werkstück anlegbar und umfasst einen Hohlraum zur Ausbildung eines Bauteils. Ferner umfasst die Matrize zwei relativ zueinander bewegbare Matrizenhälften.

Die erfindungsgemäße Arbeitsvorrichtung hat den Vorteil, dass mittels der Matrize, die an das Werkstück anlegbar ist, an der entsprechenden Stelle ein Bauteil durch ein Ausbildungsmaterial ausgebildet werden kann. Es ist demnach nicht mehr notwendig, das entsprechende Bauteil vorab zu fertigen und manuell oder maschinell am Werkstück anzubringen bzw. zu befestigen. Darüber hinaus wird gewährleistet, dass das zugeführte Ausbildungsmaterial eine enge Bindung sowie eine starke Haftung zum Werkstück entfaltet. Enge Toleranzen bei der vorangegangenen Bearbeitung des Werkstücks oder bei der Herstellung solcher Bauteile, wie diese im Stand der Technik üblicherweise auftreten, können somit vermieden bzw. behoben werden. Darüber hinaus können zwei üblicherweise voneinander getrennte Prozesse näher zusammengeführt werden. Im Rahmen der vorliegenden Erfindung wird bevorzugt ein Ausbildungsmaterial verwendet, welches bspw. teilweise Holzmaterial, insbesondere Holzschaum, Holzmehl, Schleifstaub, Sägespäne, Zellulose oder ähnliches aufweist. Ferner können Metallpasten oder -Schäume, Kunststoffpasten oder -Schäume, pastöses Material oder elektrisch leitende Materialien wie Kupferpaste oder einen elektrisch leitenden Kunststoff bzw. elektrisch leitende Biomaterialien und Bio-Kunststoffe zum Einsatz kommen.

Eine weitere Alternative ist ein kohlefaserhaltiger oder glasfaserhaltiger Werkstoff. Ferner können thermoplastische, duroplastische oder elastomere Kunststoffe eingesetzt werden.

In einer bevorzugten Ausführungsform der vorliegenden Erfindung weist das Arbeitsaggregat einen Extrudermotor auf, um ein über einen Einbringabschnitt zugeführtes Ausbildungsmaterial durch Bewegen einer in der Zuführeinheit angeordneten Extruderschnecke zu fördern. Der Einbringabschnitt kann hierbei mit einem benachbart zur Bearbeitungsvorrichtung angeordneten Speicher verbunden sein, oder der Speicher bzw. Zwischenspeicher ist direkt am Einbringabschnitt angebracht.

Das Ausbildungsmaterial kann dabei kontinuierlich zur Matrize geführt werden. Alternativ ist es möglich, das Ausbildungsmaterial in einem Förderhub in die Matrize einzubringen. Somit wird das Ausbildungsmaterial mit einem gewissen Druck in die Matrize gefördert.

Der Extruder ist gemäß einer bevorzugten Variante als Granulatextruder ausgebildet. Gemäß einer weiteren Ausführungsform ist der Extruder als Filamentextruder ausgestaltet.

Gemäß einer weiteren Ausführungsform umfasst die Vorrichtung eine Bevorratungseinheit zur Aufnahme mehrerer Matrizen, welche Bevorratungseinheit bevorzugt benachbart zum Auflageabschnitt vorgesehen ist. Somit ist es möglich, dass Matrizen mit unterschiedlich ausgestalteten Hohlräumen an der Bearbeitungsvorrichtung bereitgehalten und durch eine Einwechslung in das Arbeitsaggregat für eine Bearbeitung bereitgestellt werden können. Somit kann die Bearbeitungsvorrichtung flexibel auf neue Arbeitsaufträge reagieren.

Gemäß einer weiteren Modifikation ist das Arbeitsaggregat in vertikaler Richtung bewegbar. Auf diese Weise kann die am Arbeitsaggregat vorgesehene Matrize an ein Werkstück angedrückt werden. Dabei kann die Matrize federnd gegenüber dem Arbeitsaggregat angebracht sein.

Bei einer anderen Ausführungsform umfasst das Arbeitsaggregat eine Sensoreinrichtung, insbesondere einen Kraft- und/oder Drucksensor, um eine Anordnung der am Arbeitsaggregat vorgesehenen Matrize gegenüber einem Werkstück zu erfassen. Auf diese Weise ist es möglich, die Positionierung der Matrize relativ zum Werkstück kraft- und/oder druckgesteuert durchzuführen, um somit eine Abdichtung zwischen Matrize und Werkstück bereitzustellen. Ein in die Matrize eingeführtes Ausbildungsmaterial wird somit daran gehindert, aus der Matrize auszutreten.

Auch die mit einer Sensoreinrichtung versehene Ausgestaltung des Arbeitsaggregats kann eine Feder aufweisen, mit der die Matrize bewegbar gegenüber dem Arbeitsaggregat angebracht ist.

Gemäß einer bevorzugten Ausführungsform handelt es sich beim Auflageabschnitt um eine Fördereinrichtung, mit der Werkstücke bewegt und in dem Bereich des Arbeitsaggregats gefördert werden können. Insbesondere wird als Fördereinrichtung ein Rollenförderer, ein Riemenförderer, Gurtförderer oder ein Kettenförderer vorgesehen. Alternativ oder zusätzlich zur Fördereinrichtung kann auch der Trägerabschnitt entlang des Auflageabschnitts verfahrbar sein. Eine Variante, bei der lediglich der Trägerabschnitt verfahrbar ist, wird durch eine Bearbeitungsvorrichtung bereitgestellt, die Saugspanner, Klemmeinrichtungen, oder Ähnliches umfasst, um ein Werkstück zu fixieren.

Gemäß einer weiteren Ausführungsform der vorliegenden Erfindung sind die Matrizen relativ zueinander schwenkbar oder relativ zueinander verschiebbar. Gemäß einer weiteren Variante können die genannten Bewegungen in Kombination auftreten.

Die Zuführeinheit gemäß der vorliegenden Erfindung kann ferner einen beheizten Abschnitt umfassen, insbesondere einen beheizten Schlauch. Somit ist es möglich, das durch die Zuführeinheit geförderte, bevorzugt pastöse oder teilweise flüssige Material förderbar zu halten. Diese Ausführungsform eignet sich insbesondere in Kombination mit einem Extruder, mit dem ein granulatförmiges Ausgangsmaterial in einen pastösen bzw. fließfähigen Zustand versetzt und in die Zuführeinheit gefördert wird.

Gemäß einer weiteren Ausführungsform umfasst die Matrize im Bereich einer Austrittsöffnung zum Werkstück einen ringförmigen Vorsprung, der in eine Bohrung im Werkstück eingeführt werden kann. Auf diese Weise ist es möglich, eine besonders wirksame Abdichtung gegenüber dem Werkstück bereitzustellen und ggf. eine Zentrierung zu erreichen.

Ferner kann einen elastischen Ring vorgesehen werden, der in eine Vertiefung, insbesondere eine Bohrung, in einem Werkstück eingeführt oder um eine Vertiefung, insbesondere einer Bohrung, in einem Werkstück angelegt werden, oder die Austrittsöffnung mit einer Fase versehen ist.

Alternativ oder zusätzlich kann insbesondere bei einer Matrize, die zwei oder mehrere Matrizenhälften aufweist, eine Fase im Bereich der Austrittsöffnung vorgesehen sein.

Gemäß einer bevorzugten Ausführungsform ist das Arbeitsaggregat zumindest um eine Achse, bevorzugt um zwei oder mehr Achsen, schwenkbar, und/oder die Matrize zumindest um eine Achse, bevorzugt um zwei oder mehr Achse, schwenkbar ist. Auf diese Weise ist es möglich, die Matrize an eine geneigte Fläche des Werkstücks anzulegen und somit an dieser geneigten Fläche ein Bauteil auszubilden.

Ferner ist es bevorzugt, dass die Matrize eine Kühleinrichtung aufweist. Auf diese Weise kann der Aushärteprozess des Ausbildungsmaterials beschleunigt werden.

Die vorliegende Erfindung betrifft neben der beschriebenen Vorrichtung auch ein Verfahren. Im Rahmen des Verfahrens kommt die beschriebene Vorrichtung zum Einsatz.

Dabei stellt die Erfindung ein Verfahren mit den Merkmalen des Anspruchs 12 bereit, umfassend die Schritte:
Bereitstellen eines Werkstücks, Anlegen einer Matrize an das Werkstück, welche Matrize einen Hohlraum zur Ausbildung eines Bauteils und eine Austrittsöffnung umfasst, Einbringen, insbesondere Eindrücken, eines Ausbildungsmaterials in die Matrize zur Ausbildung eines Bauteils am Werkstück.

Bevorzugt kann das Einbringen des Ausbildungsmaterials in die Matrize druckgesteuert durchgeführt werden.

Bevorzugt ist das Werkstück mit einer Vertiefung, insbesondere einer Bohrung, versehen (bzw. eine solche Vertiefung wird in das Werkstück eingebracht), und die Austrittsöffnung der Matrize wird im Bereich der Vertiefung am Werkstück angeordnet. Auf diese Weise tritt das Ausbildungsmaterial von der Austrittsöffnung der Matrize in die Vertiefung des Werkstücks ein, so dass eine vorteilhafte Verbindung zwischen dem ausgebildeten Bauteil und dem Werkstück bereitgestellt wird.

Nachdem das Ausbildungsmaterial mit einem gewissen Druck in die Matrize eingeführt wird und in die Vertiefung des Werkstücks eindringt kann das Ausbildungsmaterial in Poren im Werkstück eingedrückt werden. Somit verhakt sich das Ausbildungsmaterial nach dessen Aushärtung mit dem Werkstück.

### Kurze Beschreibung der Zeichnungen

- Fig. 1: ist eine perspektivische Ansicht einer bevorzugten Ausführungsform der vorliegenden Erfindung
- Fig. 2: zeigt eine vergrößerte Ansicht der in Fig. 1 dargestellten Ausführungsform
- Fig. 3: ist eine weitere perspektive Ansicht der in Fig. 1 dargestellten Ausführungsform
- Fig. 4: zeigt einen Abschnitt der in Fig. 1 dargestellten Ausführungsform im Detail
- Fig. 5a: ist eine weitere Detailansicht von Elementen, die in der Bearbeitungsvorrichtung gemäß der vorliegenden Ausführungsform hergestellt werden.
- Fig. 5b: zeigt ein Beispiel eines Werkstücks, das an einer geneigten Fläche mit zwei Anbauteilen (Dübeln) versehen wurde.
- Fig. 6: zeigt eine Teilschnittansicht einer Matrize mit einem Hohlraum mit Entformungsschräge

### Detaillierte Beschreibung der bevorzugten Ausführungsformen

Nachfolgend werden anhand der beigefügten Figuren beispielhafte Ausführungsformen der vorliegenden Erfindung erläutert. Weitere in diesem Zusammenhang genannte Modifikationen bestimmter Einzelmerkmale können jeweils einzeln miteinander kombiniert werden, um weitere Ausführungsformen auszubilden.

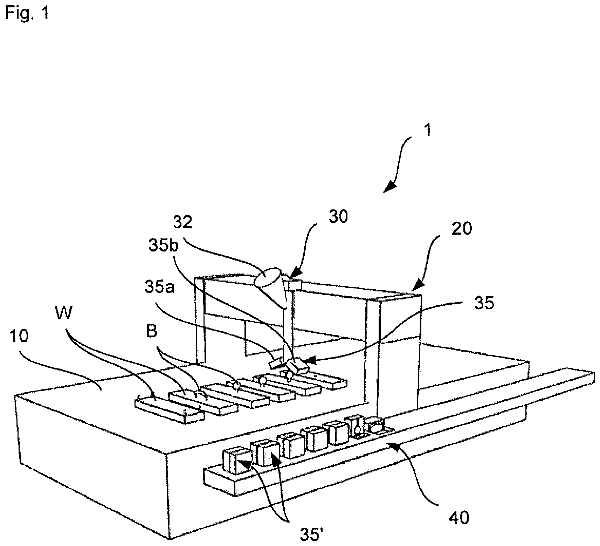

Die in Fig. 1 gezeigte Bearbeitungsvorrichtung 1 umfasst einen Auflageabschnitt 10 zur Aufnahme von Werkstücken W. Der Auflageabschnitt 10 ist in den Figuren lediglich schematisch dargestellt, und umfasst bspw. ein Maschinenbett und einen Auflagetisch. Ferner kann der Auflageabschnitt eine Fördereinrichtung umfassen, um Werkstücke in den Bereich eines Trägerabschnitts 20 zu fördern. Rein beispielhaft ist es in diesem Zusammenhang möglich, die Werkstücke W auf Saugspannern aufzunehmen, die relativ zum Maschinenbett bewegbar sind.

Im Rahmen der vorliegenden Ausführungsform handelt es sich bei dem Trägerabschnitt 20 um ein Portal, an dem ein Arbeitsaggregat 30 aufgenommen ist. Das Arbeitsaggregat 30 ist mittels eines Schlittens entlang des Trägerabschnitts 20 bewegbar und kann somit in Querrichtung verschiedene Positionen oberhalb des Auflageabschnitts 10 einnehmen. Zusätzlich ist der Trägerabschnitt entlang des Auflageabschnitts 10 verfahrbar.

Das Arbeitsaggregat 30 umfasst eine Zuführeinheit 31, die gemäß der vorliegenden Ausführungsform eine Extruderschnecke aufnimmt. Ferner ist an einem in vertikaler Richtung oberen Abschnitt des Arbeitsaggregats 30 ein Einbringabschnitt 32 vorgesehen, der in den Figuren lediglich schematisch dargestellt ist. Im Bereich des Einbringabschnitts 32 ist ein Extrudermotor 33 am Arbeitsaggregat 30 angeordnet, der somit ebenfalls an einem in vertikaler Richtung oberen Abschnitt des Arbeitsaggregats 30 vorgesehen ist. Der Extrudermotor 33 treibt die in der Zuführeinheit aufgenommene Extruderschnecke an, um ein Ausbildungsmaterial zu einer am Arbeitsaggregat 30 angebrachten Matrize (nachfolgend beschrieben) zu fördern. Das Einführen des Ausbildungsmaterials, das entweder kontinuierlich oder mit einem Förderhub stattfindet, findet mit einem gewissen Druck statt, so dass das Ausbildungsmaterial einen Hohlraum in der Matrize ausfüllt und ferner in eine Bohrung im Werkstück eindringt. Durch die Druckaufbringung wird das Material ferner in Poren der Oberfläche der Bohrung gedrückt. Dies ist insbesondere bei Spanplatten von Vorteil.

Das Arbeitsaggregat 30 umfasst ferner einen Anbringabschnitt zur Aufnahme einer Matrize 35. Die Matrize 35 kann, wie nachfolgend erläutert, gegen eine andere Matrize 35' ausgetauscht werden. Entsprechend ist das Arbeitsaggregat 30 mit einer entsprechenden Schnittstelle versehen, mittels derer der beschriebene Austausch der Matrizen ermöglicht wird.

Benachbart zum Auflageabschnitt 10 befindet sich eine Bevorratungseinheit 40, die sich gemäß der vorliegenden Ausführungsform an einer Längsseite des Auflageabschnitts 10 der Bearbeitungsvorrichtung 1 erstreckt. Die Bevorratungseinheit 40 ist eingerichtet, mehrere Matrizen 35' aufzunehmen, die in das Arbeitsaggregat 30 eingewechselt werden können. Die Übergabe der Matrizen 35' zum Bearbeitungsaggregat 30 ist auf Grund der schematischen Darstellung in den Figuren nicht explizit gezeigt, jedoch für Fachleute ohne weiteres nachvollziehbar. Insbesondere kann das Wechselsystem für die Matrizen mit einem Werkzeugwechsler verglichen werden.

Gemäß einer weiteren Modifikation kann die Bevorratungseinheit 40 auch als Scheibenwechsler ausgebildet sein, der eine drehbare Scheibe mit mehreren Aufnahmepositionen für Matrizen umfasst. Zusätzlich kann eine solche Bevorratungsvorrichtung auch mehrere Aufnahmeebenen umfasst.

Obwohl in den Figuren nicht gezeigt kann ferner eine Übergabevorrichtung vorgesehen sein, um eine Matrize aus der Bevorratungseinheit 40 zu entnehmen und an das Arbeitsaggregat 30 zu übergeben.

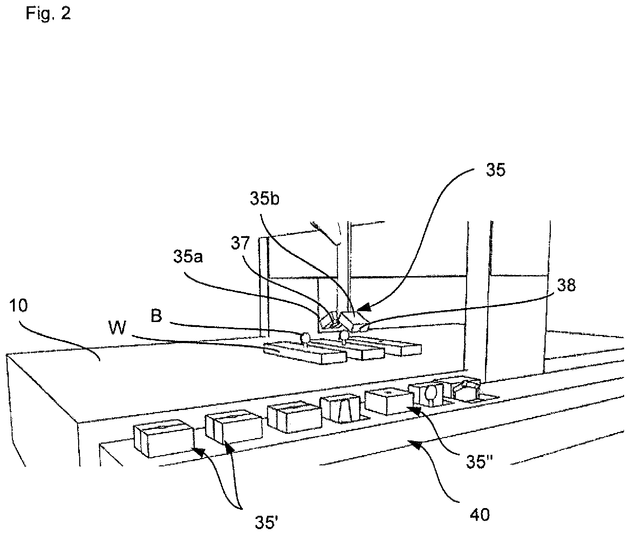

Die Matrize 35, die in bspw. Fig. 1 am Arbeitsaggregat 30 angebracht ist, setzt sich gemäß einer Ausführungsform aus zwei Matrizenhälften 35a, 35b zusammen, die relativ zueinander schwenkbar sind. Auf diese Weise ist es möglich, das in Fig. 1 bzw. Fig. 2 dargestellte Bauteil B am Werkstück W vorzusehen, welches einen Türknauf für eine Schublade mit einem kugelförmigen Abschnitt zeigt.

Die an einem Werkstück W anbringbaren Bauteile B werden in ihrer Form durch die Ausgestaltung des Hohlraums 37, 37' der Matrize 35, 35' definiert. In den Figuren sind vielfältige Beispiele solcher Bauteile B dargestellt. Beispielsweise kann es sich bei Bauteil B um einen zylinderförmigen Stift, einen Schubladengriff, einen kugelförmigen Knauf oder Ähnliches handeln.

Die Matrize 35, 35' umfasst eine Eintrittsöffnung 36, 36', durch die ein Ausbildungsmaterial in die Matrize eingeführt wird, welches Ausbildungsmaterial durch die Zuführeinheit 31 gelangt. Von der Eintrittsöffnung 36, 36' gelangt das Ausbildungsmaterial in den Hohlraum 37, 37' der Matrize. Ferner umfasst Matrize eine Austrittsöffnung 38, 38', die mit dem Hohlraum 37, 37' in Verbindung steht und an der Seite der Matrize ausgebildet ist, die bei Betrieb der Matrize zu einem Werkstück W weist.

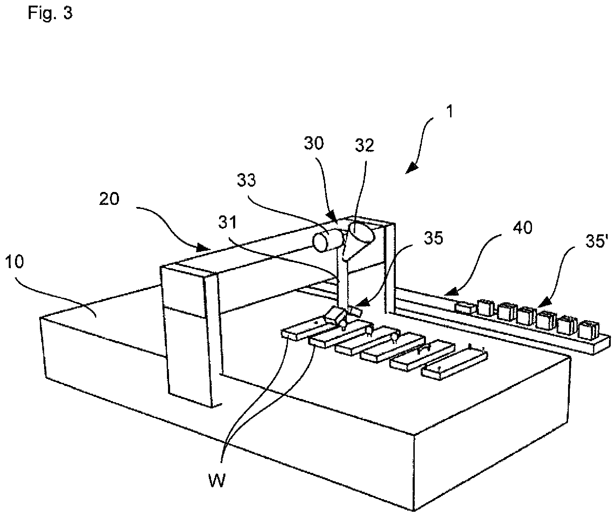

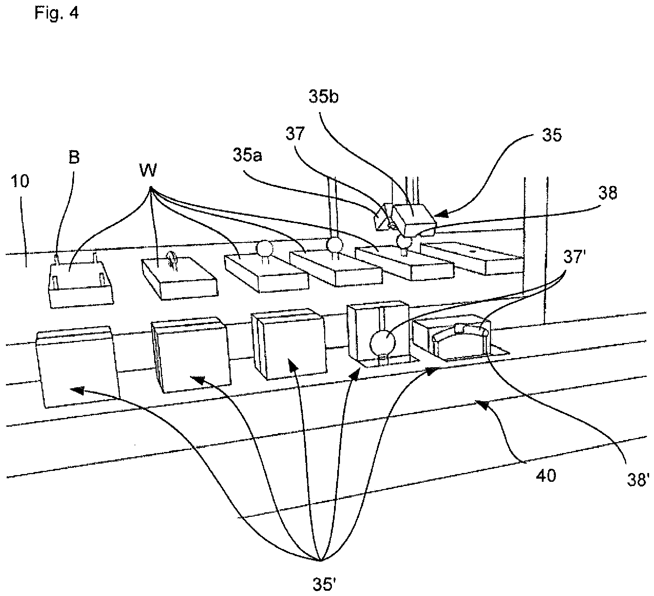

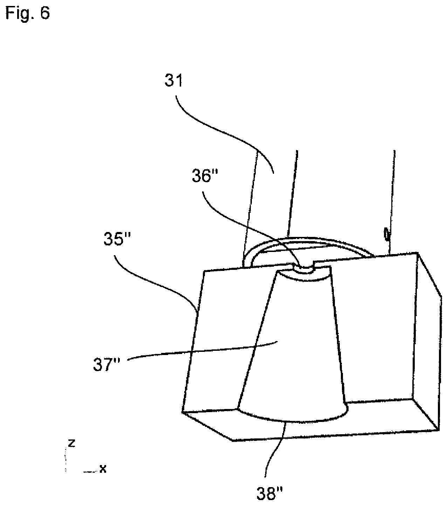

Obwohl die Matrize gemäß einer Ausführungsform in den Figuren 1-4 zweiteilig ausgebildet ist, kann im Rahmen der vorliegenden Erfindung auch eine einteilige Matrize 35 verwendet werden, wie diese beispielsweise in Figur 6 dargestellt ist.

Die in Figur 6 dargestellt Matrize 35" umfasst hierbei wie in den vorangegangen Beispielen eine Eintrittsöffnung 36", einen Hohlraum 37" so eine Austrittsöffnung 38". Der Hohlraum 37" ist in der in Figur 6 dargestellt Ausführungsform kegelstumpfförmig ausgebildet, sodass die Seitenwand des Hohlraums 37" eine Entformungsschräge darstellt. Diese Weise ist es möglich, ein Ausbildungsmaterial durch die Eintrittsöffnung 36 in den Hohlraum 37" einzuführen, wobei das Ausbildungsmaterial teilweise durch die Austrittsöffnung 38" in eine Vertiefung, Kerbe, oder Bohrung Werkstück W eintritt. Nachdem das Ausbildungsmaterial zumindest teilweise ausgehärtet ist, kann die Matrize 35" gemäß Figur 6 vom Werkstück W entfernt werden, wobei das am Werkstück W ausgebildete Bauteil B an diesem verbleibt.

Der Betrieb der Bearbeitungsvorrichtung 1 stellt sich somit im Detail wie folgt dar.

Zunächst wird ein Werkstück W zugeführt, das bevorzugt mit einer oder mehreren Bohrungen versehen ist bzw. mittels der Bearbeitungsvorrichtung 1, die mit einem Bohr- oder Fräsaggregat versehen ist, mit einer solchen Bohrung versehen wird.

Obwohl im Rahmen der vorliegenden Ausführungsform bevorzugt eine Bohrung oder eine ähnliche Vertiefung am Werkstück W in demjenigen Bereich vorbereitet ist, an dem das Bauteil B vorzusehen ist, muss das Werkstück W nicht zwingend mit einer solchen Bohrung versehen sein. Ferner können alternativ andersartige Vertiefungen am Werkstück vorgesehen sein.

Das Arbeitsaggregat 30 wird durch eine Bewegung des Werkstücks W und/oder Bewegungen des Trägerabschnitts 20 bzw. des Arbeitsaggregats 30 relativ zueinander ausgerichtet. Nachfolgend wird das Arbeitsaggregat 30 in vertikaler Richtung in Richtung des plattenförmigen Werkstücks W zugestellt, sodass die Austrittsöffnung 38 der Matrize 35 mit der bereits im Werkstück W vorgesehenen Bohrung ausgerichtet wird. Nachfolgend wird die Matrize 35 durch eine Bewegung des Arbeitsaggregats 30 oder einer Bewegung der Matrize 35 relativ zum Arbeitsaggregat 30 an das Werkstück angedrückt.

Bevorzugt ist im Bereich der Matrize 35 oder des Arbeitsaggregats 30 eine Sensoreinrichtung vorgesehen, um einen ausreichenden Anpressdruck festzustellen. Liegt ein entsprechender Anpressdruck vor, der eine Abdichtung der Matrize relativ zum Werkstück W gewährleistet, wird der Extrudermotor 33 betätigt, um ein Ausbildungsmaterial in Richtung der Matrize 35 zu fördern.

Nachdem das Ausbildungsmaterial zumindest teilweise ausgehärtet ist, wird die zweiteilige Matrize 35 gemäß Fig. 1 durch eine Schwenkbewegung geöffnet, und das durch die Matrize 35 ausgebildete Bauteil B härtet bei Umgebungstemperatur weiter aus.

In diesem Zusammenhang kann die Matrize mit einem Kühlelement bzw. einer Kühleinrichtung versehen sein, um das Ausbildungsmaterial nach Einbringung in die Matrize aktiv zu kühlen und somit das Verarbeitungsverfahren weiter zu beschleunigen.

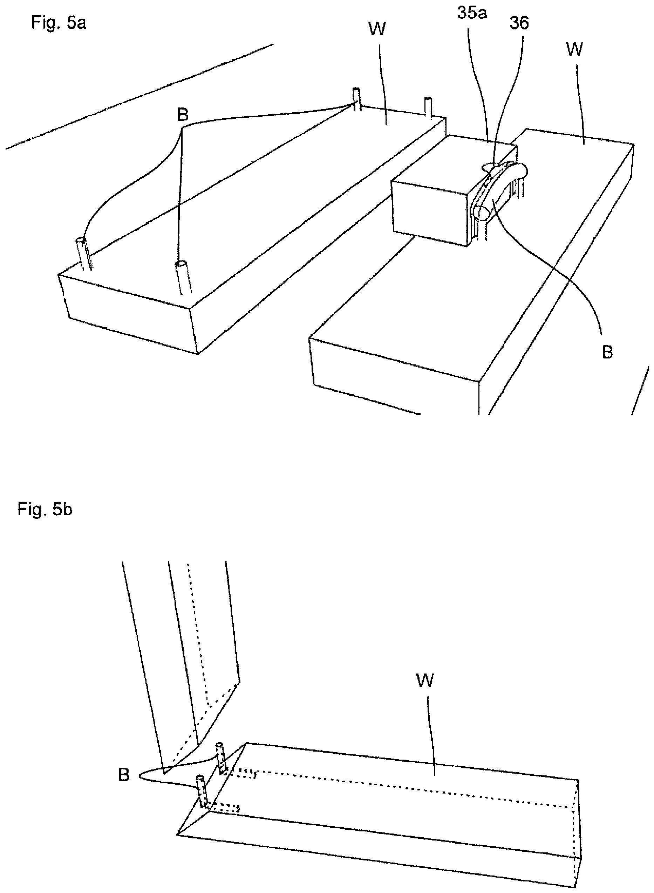

In den Figuren 5a und 5b werden verschiedene Beispiele für Anbauteile an Werkstücken gezeigt.

Beispielsweise kann ein Werkstück W mit mehreren Stiften (siehe linke Darstellung in Figur 5a) oder einem Griff (siehe rechte Darstellung in Figur 5a) als einem Beispiel eines Anbauteils B versehen werden.

Ferner ist im Rahmen der vorliegenden Erfindung möglich, Anbauteile B an einer schrägen Fläche eines Werkstücks W anzubringen (siehe Figur 5b). Hierzu wird das Arbeitsaggregat 30 und/oder die Matrize 35, 35' gedreht, sodass diese an die schräge Fläche des Werkstücks W angelegt werden kann.

Obwohl im Rahmen der obigen Beschreibung Matrizen beschrieben wurden, die einen einzigen Hohlraum aufweisen, ist es gemäß einer weiteren Ausgestaltung der vorliegenden Bindung möglich, Matrizen einzusetzen, die mehrere Hohlräume umfassen, sodass gleichzeitig mehrere Bauteile an einem Werkstück ausgebildet werden können.

## Patentansprüche

1. Vorrichtung (1) zur Verarbeitung von Werkstücken (W), insbesondere zur Verarbeitung von Werkstücken aus Holz, Holzwerkstoffen, oder dergleichen, aufweisend:
einen Auflageabschnitt (10) zur Aufnahme eines Werkstücks (W),
einen Trägerabschnitt (20), insbesondere einen Ausleger, ein Portal oder Gelenkarmroboter, welcher Trägerabschnitt (20) ein Arbeitsaggregat (30) aufnimmt,
wobei das Arbeitsaggregat (30) eine an einem Werkstück anlegbare Matrize (35, 35', 35") aufnimmt und eine Zuführeinheit (31) zum Zuführen eines Ausbildungsmaterials in eine Eintrittsöffnung (36, 36', 36") der Matrize (35, 35', 35") umfasst, welche Matrize (35, 35', 35") einen Hohlraum (37, 37', 37") zur Ausbildung eines Bauteils (B) und eine Austrittsöffnung (38, 38', 38") aufweist,
**dadurch gekennzeichnet, dass**
die Matrize (35, 35') zwei relativ zueinander bewegbare Matrizenhälften (35a, 35b) aufweist.

2. Vorrichtung (1) gemäß Anspruch 1, **dadurch gekennzeichnet, dass** das Arbeitsaggregat (30) einen Extrudermotor (33) aufweist, mit dem eine in der Zuführeinheit (31) angeordnete Extruderschnecke angetrieben wird.

3. Vorrichtung (1) gemäß einem der vorangegangenen Ansprüche, **dadurch gekennzeichnet, dass** die Bearbeitungsvorrichtung (1) eine Bevorratungseinheit (40) zur Aufnahme mehrerer Matrizen (35') umfasst, welche Bevorratungseinheit bevorzugt benachbart zum Auflageabschnitt (10) vorgesehen ist.

4. Vorrichtung (1) gemäß einem der vorangegangenen Ansprüche, **dadurch gekennzeichnet, dass** das Arbeitsaggregat (30) in vertikaler Richtung bewegbar ist.

5. Vorrichtung (1) gemäß einem der vorangegangenen Ansprüche, **dadurch gekennzeichnet, dass** das Arbeitsaggregat (30) eine Sensoreinrichtung, insbesondere einen Kraft- und/oder Drucksensor, umfasst, um eine Anordnung der am Arbeitsaggregat (30) vorgesehenen Matrize gegenüber einem Werkstück (W) zu erfassen, und/oder die Matrize (35, 35', 35") federnd bewegbar ist.

6. Vorrichtung (1) gemäß einem der vorangegangenen Ansprüche, **dadurch gekennzeichnet, dass** der Auflageabschnitt (10) eine Fördereinrichtung, insbesondere einen Rollenförderer, einen Riemenförderer einen Kettenförderer oder Gurtförderer umfasst, um ein Werkstück (W) zu bewegen,
und/oder
der Trägerabschnitt (20) entlang des Auflageabschnitts (10) bewegbar, insbesondere verfahrbar, ist.

7. Vorrichtung (1) gemäß einem der vorangegangenen Ansprüche, **dadurch gekennzeichnet, dass** die Matrize (35, 35') zwei relativ zueinander schwenkbare und/oder verschiebbare Matrizenhälften (35a, 35b) aufweist.

8. Vorrichtung (1) gemäß einem der vorangegangenen Ansprüche, **dadurch gekennzeichnet, dass** die Zuführeinheit (31) zum Zuführen eines Ausbildungsmaterials einen beheizten Abschnitt, beispielsweise einen beheizten Schlauch, umfasst.

9. Vorrichtung (1) gemäß einem der vorangegangenen Ansprüche, **dadurch gekennzeichnet, dass** die Matrize im Bereich der Austrittsöffnung (38, 38', 38") einen ringförmigen Vorsprung oder einen elastischen Ring aufweist, der in eine Vertiefung, insbesondere eine Bohrung, in einem Werkstück eingeführt oder um eine Vertiefung, insbesondere einer Bohrung, in einem Werkstück angelegt werden kann, oder die Austrittsöffnung (38, 38', 38") mit einer Fase versehen ist.

10. Vorrichtung (1) gemäß einem der vorangegangenen Ansprüche, **dadurch gekennzeichnet, dass** das Arbeitsaggregat (30) zumindest um eine Achse, bevorzugt um zwei oder mehr Achse, schwenkbar ist, und/oder die Matrize (35, 35', 35") zumindest um eine Achse, bevorzugt um zwei oder mehr Achse, schwenkbar ist.

11. Vorrichtung (1) gemäß einem der vorangegangenen Ansprüche, **dadurch gekennzeichnet, dass** die Matrize (35, 35', 35") eine Kühleinrichtung aufweist.

12. Verfahren zur Verarbeitung bevorzugt plattenförmigen Werkstücken (W), insbesondere zur Verarbeitung von Werkstücken aus Holz, Holzwerkstoffen, oder dergleichen, unter Einsatz einer Vorrichtung gemäß einem der vorangegangenen Ansprüche, umfassend die Schritte:
Bereitstellen eines Werkstücks (W),
Anlegen der Matrize (35, 35', 35") an das Werkstück (W),
Einbringen, insbesondere Eindrücken, eines Ausbildungsmaterials in die Matrize (35, 35', 35") zur Ausbildung eines Bauteils am Werkstück (W).

13. Verfahren gemäß Anspruch 12, **dadurch gekennzeichnet, dass** das Werkstück (W) mit einer Vertiefung, insbesondere einer Bohrung, versehen wird, und die Austrittsöffnung (38, 38', 38") der Matrize (35, 35', 35") im Bereich der Vertiefung am Werkstück (W) angeordnet wird.

14. Verfahren gemäß einem der Ansprüche 12-13, **dadurch gekennzeichnet, dass** das Ausbildungsmaterial ausgewählt ist aus einem Material, das zumindest teilweise Holzmaterial, insbesondere Holzschaum, Holzmehl, Schleifstaub, Sägespäne, Zellulose oder ähnliches, aufweist, oder einer Metallpaste oder -schaum, einer Kunststoffpaste oder -schaum, oder einem pastösen Material.

## Claims

1. Device (1) for processing workpieces (W), in particular for processing workpieces made of wood, wood materials or the like, comprising:
a support section (10) for holding a workpiece (W),
a carrier section (20), in particular a boom, a portal or articulated arm robot, said carrier section (20) holding a work unit (30),
wherein the work unit (30) holds a die (35, 35', 35") which can be placed against a workpiece and a feed unit (31) for feeding a forming material into an inlet opening (36, 36', 36") of the die (35, 35', 35"), said die (35, 35', 35") having a cavity (37, 37', 37") for forming a component (B) and an outlet opening (38, 38', 38''),
**characterised in that**
the die (35, 35') comprises two die halves (35a, 35b) which can be moved relative to one another.

2. Device (1) according to claim 1, **characterised in that** the work unit (30) has an extruder motor (33) with which an extruder screw arranged in the feed unit (31) is driven.

3. Device (1) according to one of the preceding claims, **characterised in that** the processing device (1) has a storage unit (40) for holding several dies (35'), said storage unit preferably being provided adjacent to the support section (10).

4. Device (1) according to one of the preceding claims, **characterised in that** the work unit (30) can be moved in a vertical direction.

5. Device (1) according to one of the preceding claims, **characterised in that** the work unit (30) has a sensor device, in particular a force and/or pressure sensor in order to detect an arrangement of the die on the work unit (30) in relation to a workpiece (W), and/or the die (35, 35', 35") can be moved in a resilient manner.

6. Device (1) according to one of the preceding claims, **characterised in that** the support section (10) comprises a conveyor device, in particular a roller conveyor, a strap conveyor, a chain conveyor or belt conveyor in order to move a workpiece (W),
and/or
the carrier section (20) can be moved, in particular transported, along the support section (10).

7. Device (1) according to one of the preceding claims, **characterised in that** the die (35, 35') comprises two die halves (35a, 35b) which can be swivelled and/or slid relative to one another.

8. Device (1) according to one of the preceding claims, **characterised in that** the feed unit (31) for feeding a forming material has a heated section, for example a heated hose.

9. Device (1) according to one of the preceding claims, **characterised in that** the die has an annular projection or an elastic ring in the region of the outlet opening (38, 38', 38") which can be introduced into a depression, in particular a bore, in a workpiece, or laid around a depression, in particular a bore, in a workpiece, or the outlet opening (38, 38', 38") is provided with a bevel.

10. Device (1) according to one of the preceding claims, **characterised in that** the work unit (30) is swivelable at least around one axis, preferably around two or more axes, and/or the die (35, 35', 35") is swivelable at least around one axis, preferably around two or more axes.

11. Device (1) according to one of the preceding claims, **characterised in that** the die (35, 35', 35") has a cooling device.

12. Method for processing preferably panel-formed workpieces (W), in particular for processing workpieces made of wood, wood materials or the like, using a device according to one of the preceding claims, comprising the steps:
providing a workpiece (W),
applying the die (35, 35', 35") to the workpiece (W'),
introducing, in particular pressing, a forming material into the die (35, 35', 35") in order to form a component on the workpiece (W).

13. Method according to claim 12, **characterised in that** the workpiece (W) is provided with a depression, in particular a bore, and the outlet opening (38, 38', 38") of the die (35, 35', 35") is arranged on the workpiece (W) in the region of the depression.

14. Method according to one of the claims 12-13, **characterised in that** the forming material is selected from a material which at least partially comprises wood material, in particular wood foam, wood flour, sanding dust, sawdust, cellulose or the like, or a metal paste or foam, a plastic paste or foam or a paste-like material.

## Revendications

1. Dispositif (1) pour le traitement de pièces à usiner (W), en particulier pour le traitement de pièces à usiner en bois, matériaux dérivés du bois ou similaires, présentant :
une section d'appui (10) pour la réception d'une pièce à usiner (W),
une section de support (20), en particulier un bras en porte-à-faux, un portique ou robot à bras articulé, laquelle section de support (20) reçoit un agrégat de travail (30),
dans lequel l'agrégat de travail (30) reçoit une matrice (35, 35', 35") pouvant être placée contre une pièce à usiner et comprend une unité d'amenée (31) pour l'amenée d'un matériau de réalisation dans une ouverture d'entrée (36, 36', 36") de la matrice (35, 35', 35"), laquelle matrice (35, 35', 35") présente une cavité (37, 37', 37") pour la réalisation d'un composant (B) et une ouverture de sortie (38, 38', 38"),
**caractérisé en ce que**
la matrice (35, 35') présente deux moitiés de matrice (35a, 35b) mobiles l'une par rapport à l'autre.

2. Dispositif (1) selon la revendication 1, **caractérisé en ce que** l'agrégat de travail (30) présente un moteur d'extrudeuse (33), avec lequel une vis d'extrudeuse agencée dans l'unité d'amenée (31) est entraînée.

3. Dispositif (1) selon l'une des revendications précédentes, **caractérisé en ce que** le dispositif de traitement (1) comprend une unité de stockage (40) pour la réception de plusieurs matrices (35'), laquelle unité de stockage est de préférence prévue de manière contigüe à la section d'appui (10).

4. Dispositif (1) selon l'une des revendications précédentes, **caractérisé en ce que** l'agrégat de travail (30) est mobile dans le sens vertical.

5. Dispositif (1) selon l'une des revendications précédentes, **caractérisé en ce que** l'agrégat de travail (30) comprend un appareil capteur, en particulier un capteur de force et/ou de pression afin de détecter un agencement de la matrice prévue au niveau de l'agrégat de travail (30) par rapport à une pièce à usiner (W), et/ou la matrice (35, 35', 35") est mobile de manière élastique.

6. Dispositif (1) selon l'une des revendications précédentes, **caractérisé en ce que** la section d'appui (10) comprend un appareil de transport, en particulier un transporteur à rouleaux, un transporteur à courroie, un transporteur à chaîne ou transporteur à sangle afin de déplacer une pièce à usiner (W),
et/ou
la section de support (20) est mobile, en particulier déplaçable, le long de la section d'appui (10).

7. Dispositif (1) selon l'une des revendications précédentes, **caractérisé en ce que** la matrice (35, 35') présente deux moitiés de matrice (35a, 35b) pivotantes et/ou mobiles l'une par rapport à l'autre.

8. Dispositif (1) selon l'une des revendications précédentes, **caractérisé en ce que** l'unité d'amenée (31) comprend une section chauffée pour l'amenée d'un matériau de réalisation, par exemple un tuyau chauffé.

9. Dispositif (1) selon l'une des revendications précédentes, **caractérisé en ce que** la matrice présente dans la zone de l'ouverture de sortie (38, 38', 38") une saillie de forme annulaire ou un anneau élastique, qui peut être introduit(e) dans une cavité, en particulier un perçage, dans une pièce à usiner ou peut être placé(e) autour d'une cavité, en particulier un perçage, dans une pièce à usiner, ou l'ouverture de sortie (38, 38', 38") est pourvue d'un chanfrein.

10. Dispositif (1) selon l'une des revendications précédentes, **caractérisé en ce que** l'agrégat de travail (30) est pivotant au moins autour d'un axe, de préférence autour de deux axes ou plus, et/ou la matrice (35, 35', 35") est pivotante au moins autour d'un axe, de préférence autour de deux axes ou plus.

11. Dispositif (1) selon l'une des revendications précédentes, **caractérisé en ce que** la matrice (35, 35', 35") présente un appareil de refroidissement.

12. Procédé de traitement de pièces à usiner (W) de préférence en forme de plaque, en particulier pour le traitement de pièces à usiner en bois, matériaux dérivés du bois, ou similaires, en utilisant un dispositif selon l'une des revendications précédentes, comprenant les étapes suivantes :
mise à disposition d'une pièce à usiner (W),
placement de la matrice (35, 35', 35") contre la pièce à usiner (W),
introduction, en particulier enfoncement, d'un matériau de réalisation dans la matrice (35, 35', 35") pour la réalisation d'un composant au niveau de la pièce à usiner (W).

13. Procédé selon la revendication 12, **caractérisé en ce que** la pièce à usiner (W) est pourvue d'une cavité, en particulier d'un perçage, et l'ouverture de sortie (38, 38', 38") de la matrice (35, 35', 35") est agencée dans la zone de la cavité au niveau de la pièce à usiner (W).

14. Procédé selon l'une des revendications 12 à 13, **caractérisé en ce que** le matériau de réalisation est sélectionné à partir d'un matériau qui présente au moins partiellement du matériau de bois, en particulier mousse de bois, fibre de bois, poussière de meulage, copeaux de bois, cellulose ou similaire, ou une pâte ou mousse métallique, une pâte ou mousse plastique, ou un matériau pâteux.
